**Europäisches Patentamt**

**European Patent Office**

**Office européen des brevets**

(19)

(11) Numéro de publication: **0 012 076**
**B1**

# FASCICULE DE BREVET EUROPEEN

(12)

(45) Date de publication du fascicule du brevet: **27.10.82**

(51) Int. Cl.³: **G 01 V 9/04**

(21) Numéro de dépôt: **79400915.9**

(22) Date de dépôt: **26.11.79**

(54) Dispositif de détection de présence d'objets sur un tapis convoyeur.

(30) Priorité: **27.11.78 FR 7833404**
**05.02.79 FR 7902871**

(43) Date de publication de la demande:
**11.06.80 Bulletin 80/12**

(45) Mention de la délivrance du brevet:
**27.10.82 Bulletin 82/43**

(84) Etats contractants désignés:
**AT BE CH DE FR GB NL SE**

(56) Documents cités:
**GB - A - 1 464 466**
**US - A - 3 360 654**

**ARCHIV FÜR TECHNISCHES MESSEN, V 8253-12, janvier 1965,**
**München, DE.**
**H. GÜNTHER: "Messtechnik bei der Kabelfertigung, Teil 1", pages 11—13.**

(73) Titulaire: **TISSMETAL LIONEL-DUPONT**
**138 boulevard de la Croix-Rousse**
**F-69001 Lyon (FR)**

(72) Inventeur: **Binet, Alain René**
**18 rue Maurice Berteaux**
**Sèvres, Hauts-de-Seine (FR)**

(74) Mandataire: **Casanova, André et al,**
**Cabinet Casanova et Akerman 23 Boulevard de**
**Strasbourg**
**F-75010 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Dispositif de détection de présence d'objets sur un tapis convoyeur.

La présente invention a pour objet un dispositif de détection de présence d'objets, en particulier mais non exclusivement sur un tapis convoyeur.

On sait qu'en particulier dans les dispositifs de tri postal automatique il est nécessaire de pouvoir déterminer la présence ou non d'un objet.

Dans ce domaine, la difficulté essentielle provient de ce que les objets à trier et à acheminer sont de volumes variables et assez souvent très irréguliers.

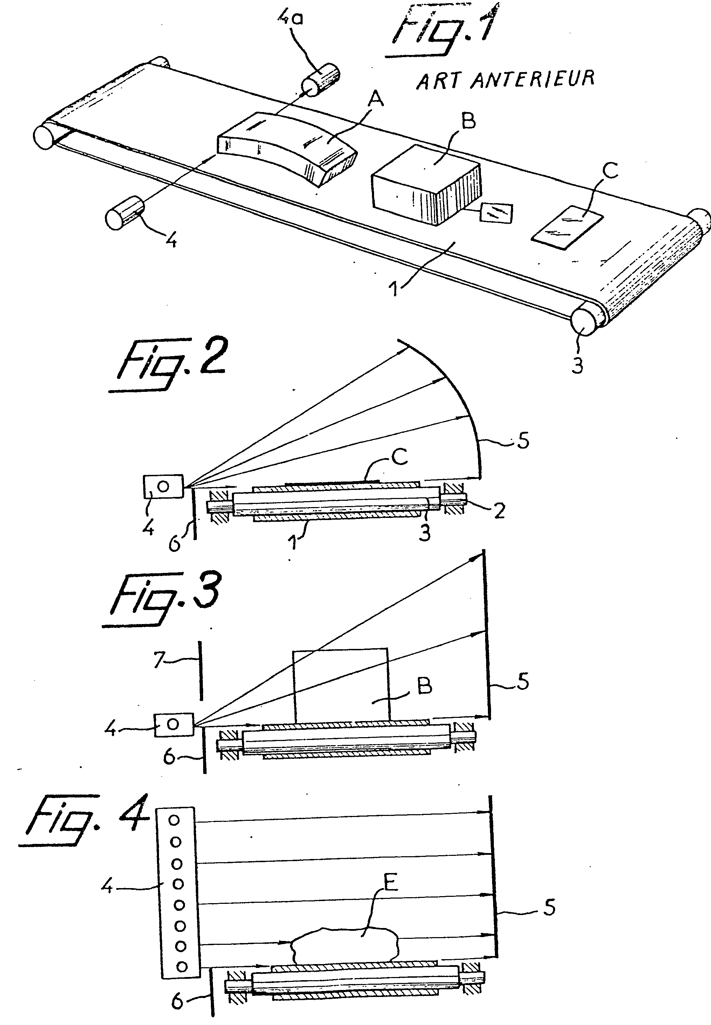

La figure 1 représente un dispositif connu de détection de présence d'objets. Sur le tapis convoyeur 1, ont été représentés trois objets A, B et C. L'objet A présente une forme en pont, c'est-à-dire que la détection de sa présence à l'aide d'une cellule photo-électrique classique comprenant un émetteur 4 et un récepteur 4a se traduit non pas par un seul signal, mais par deux signaux résultant de l'occultation du faisceau photo-électrique par la partie avant et la partie arrière de l'objet. Il en résulte que le dispositif de traitement informatique de tri des colis est complètement perturbé par la confusion entre cet objet unique et les deux signaux électriques émis lors de son passage que le système informatique interprète comme la présence de deux objets distincts.

Le même inconvénient se produit dans le cas d'un paquet B auquel est reliée une étiquette, le détecteur classique détectant la présence de deux objets qui, au point de vue acheminement, n'en constituent qu'un.

Enfin, dans le cas d'un objet plat tel qu'une lettre représentée en C, il peut arriver que cet objet passe au-dessous du faisceau lumineux, son passage n'étant pas détecté, ce qui se traduit par les inconvénients mentionnés précédemment.

On connaît d'autre part des cellules dites à balayage dans lesquelles le faisceau luminaux subit en permanence une déviation sinusoïdale. Ces cellules sont de type reflex, ce qui signifie qu'il est nécessaire de placer en face de l'émetteur récepteur une surface réfléchissante formant miroir, les objets défilant entre la cellule et le réflecteur. Pratiquement, dans un système à tapis convoyeur, la cellule doit être placée latéralement au tapis convoyeur et le réflecteur, de l'autre côté de ce tapis. En effet, une autre disposition obligerait à couper le tapis en deux, dans le sens de la longueur pour que le faisceau tombe toujours sur le réflecteur. Mais le problème des objets plats ou ayant une surface discontinue reste entier car la détection au voisinage du tapis est imparfaite.

La présente invention a pour objet de remédier à ces inconvénients. Selon la présente invention, le dispositif de détection de présence d'objets sur un tapis convoyeur, incluant une cellule photo-électrique de type reflex à balayage et une surface réflechissante placée en regard de la cellule, est caractérisé en ce que ladite surface réflechissante est divisée en au moins deux parties formant pour la cellule une surface continue, les deux parties étant disposées de part et d'autre du trajet des objets.

On compense par le dispositif selon l'invention les dérives éventuelles de la cellule au cours de son fonctionnement et il est possible de réaliser très simplement une détermination exacte de la surface balayée.

D'autres caractéristiques et avantages de l'invention apparaîtront au cours de la description qui va suivre de modes de réalisation donnés à titre d'exemples non limitatifs, en regard des figures qui représentent:

— la figure 2 un premier mode de réalisation dans lequel une surface réfléchissante est de forme générale concave;

— la figure 3 un second mode de réalisation dans lequel une surface réfléchissante est plane;

— la figure 4 un autre mode de réalisation de l'invention dans lequel on utilise une cellule reflex dite à rideau.

Sur la figure 2, le tapis convoyeur 1 est entraîné par des rouleaux 3 montés sur des axes 2, une cellule reflex à balayage 4 (par exemple du type commercialisé sous la marque JAY type MAD) est disposée sur le bord gauche du tapis, une surface réfléchissante 5 étant placée sur le bord droit de celui-ci. Conformément à l'invention, le réflecteur de la cellule est constitué d'une part par la surface réfléchissante 5 de forme théorique cylindrique et d'une surface plane 6 placée du côté de la cellule. Par un positionnement précis du bord supérieur de la surface 6, on voit qu'il est possible d'obtenir que le faisceau lumineux rase la surface du tapis convoyeur de sorte qu'un objet plat C tel qu'une lettre soit détecté d'une manière sûre. Pratiquement, selon l'invention, au réglage délicat des caractéristiques électriques de balayage de la cellule est substitué un réglage mécanique beaucoup plus simple de position des surfaces réfléchissantes constituant le réflecteur. Ce positionnement peut d'ailleurs être effectué à l'aide de la cellule elle-même puisqu'il suffit de monter progressivement le réflecteur 6 jusqu'à ce que le tapis n'apparaisse plus lors du balayage de la cellule. On notera d'ailleurs que cette dernière ne voit qu'une surface réfléchissante continue.

La présence du miroir courbe peut toutefois être un inconvénient dans une installation travaillant dans des conditions difficiles et, compte tenu que ce qui importe dans un dispositif de détection d'objets est ce qui se passe au voisinage du tapis, on peut également employer un dispositif de détection tel que celui qui est représenté sur la figure 3. Sur cette figure, le réflecteur est constitué de trois parties rectilignes 5, 6 et 7. Pratiquement, les surfaces 6 et 7 déterminent une fenêtre qui est balayée par le faisceau lumineux qui se réfléchit sur la surface 5 dans le cas où il n'y a pas occultation du faisceau et revient sur la cellule 4. Dans ces conditions, la présence d'un objet présentant à sa partie inférieure une forme en pont est détectée comme la présence d'un seul objet.

Dans le cas d'une cellule à rideau telle que celle qui est représentée sur la figure 4, le procédé de détection est exactement le même et l'on retrouve sur cette figure le réflecteur en deux parties respectivement 5 et 6, le rideau de cellules constituant la cellule 4 jouant un rôle équivalent à celui de la cellule de balayage représenté sur les figures précédentes.

Le dispositif objet de la présente invention permet donc par un réglage mécanique simple d'assurer une détection fiable de la présence d'objets présentant des contours irréguliers. Dans certains cas, il peut exister une sorte de saturation de la photodiode lors du passage d'une partie de la surface réfléchissante à une autre, saturation vraisemblablement due à une variation trop grande de l'intensité du faisceau réfléchi. Cette saturation de la photodiode se traduit par la présence d'une zone morte dans laquelle aucune information significative ne peut être obtenue. Or, il se trouve que cette zone morte correspond à peu près exactement à la surface du tapis convoyeur qui est bien entendu la plus intéressante. Selon une autre caractéristique de l'invention, le pouvoir réfléchissant de la partie placée derrière le tapis est supérieur au pouvoir réfléchissant de la partie placée du côté de la cellule. On sait que le pouvoir réfléchissant peut par exemple s'exprimer par un facteur de multiplication de la brillance d'une surface blanche sous un angle de 1/3 de degré. Ainsi, les intensités des lumières réfléchies reçues sur la cellule sont du même ordre de grandeur et la saturation de la photodiode de réception disparaît.

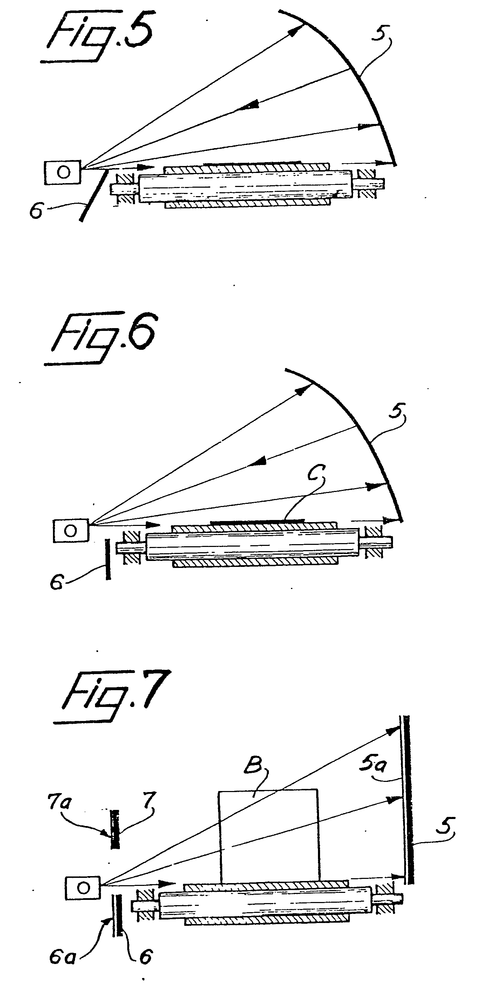

Dans le mode de réalisation, représenté sur la figure 5, la surface réfléchissante est composée de deux parties 5 et 6 dont l'une est de forme sensiblement parabolique. Le pouvoir réfléchissant de la surface 6 doit être inférieur à celui de la surface 5 comme il a été expliqué précédemment. A cette fin, la surface 6 est inclinée d'un angle d'environ 30° par rapport à la verticale. Or, on sait que le pouvoir réfléchissant d'une surface varie avec l'incidence sous laquelle tombent les rayons. Ainsi, il n'existe plus de saturation de la photodiode puisque les rayons réfléchis sur la surface 6 reviennent sur la cellule avec une intensité moindre que dans le cas d'une incidence normale.

Dans le mode de réalisation de la figure 6, on a tenu compte du fait que, dans la pratique, le faisceau émis par une cellule n'est pas ponctuel, c'est-à-dire qu'à partir d'une tache centrale existe une zone de pénombre. En abaissant le bord supérieur de la partie 6 légèrement au-dessous de la surface supérieure du tapis convoyeur 1, on a observé que la transition d'une partie réfléchissante à une autre était exempte du phénomène de saturation mentionné ci-dessus.

Sur la figure 7, est représenté un autre mode de réalisation qui est caractérisé en ce que la nature même de la surface réfléchissante est modifiée de manière à ce que le pouvoir réfléchissant des parties proches de la cellule soit inférieur à celui de la partie opposée. Ce résultat peut être obtenu très facilement en recouvrant les surfaces mentionnées d'une pellicule rétro-réfléchissante. A titre d'exemple uniquement, des résultats satisfaisants ont été obtenus en recouvrant la partie 5a d'un revêtement rétro-réfléchissant du type "SCOTCHLITE 3870", les surfaces 6a et 7a étant revêtues d'un revêtement du type "SCOTCHLITE 3270", le pouvoir réfléchissant du "SCOTCHLITE 3270", étant de 200 alors que celui du "SCOTCHLITE 3870" est de 500. SCOTCHLITE étant une marque déposée par la Société 3M. Il est bien évident que ce revêtement peut être utilisé que la partie proche de la cellule soit composée ou non de deux réflecteurs. Ce dernier mode de réalisation présente l'avantage sur les deux précédentes de ne pas nécessiter de réglage mécanique supplémentaire.

Dans un autre mode de réalisation (non représenté), le haut de la partie 6 de la surface réfléchissante est découpé en dents de scie et recouvre légèrement le bord inférieur de la partie 5 de la surface réfléchissante. Ainsi, le pouvoir réfléchissant varie progressivement entre la partie 6 et la partie 5 de la surface réfléchissante ce qui permet de pallier la phénomène de saturation de la photodiode réceptrice mentionné plus haut.

Il va de soi que des modifications peuvent être apportées aux modes de réalisation qui viennent d'être décrits, notamment par substitution de moyens techniques équivalents, sans sortir pour cela du cadre de la présente invention et par exemple en utilisant des revêtements de couleurs différentes.

**Revendications**

1. Dispositif de détection de présence d'objets (C, B, E) sur un tapis convoyeur (1) incluant une cellule photoélectrique (4) de type reflex à balayage et une surface réfléchissante placée en regard de la cellule, caractérisé en ce que ladite surface réfléchissante est divisée en au moins deux parties (5, 6) formant pour la cellule (4) une surface continue, et disposées de part et d'autre du trajet des objets (C, B, E).

2. Dispositif selon la revendication 1, caractérisé en ce que la partie (5) de la surface réfléchissante opposée à la cellule (4) par rapport au tapis convoyeur (1) se présente sous la forme d'un miroir courbe.

3. Dispositif selon la revendication 1, caractérisé en ce que la surface réfléchissante est constituée de trois parties planes (5, 6, 7), deux parties (6, 7) étant disposées du côté de la cellule (4) et la troisième (5) opposée à ladite cellule (4) par rapport au tapis convoyeur (1), les deux premières parties (6, 7) définissant une fenêtre de balayage.

4. Dispositif de détection de présence d'objets sur un tapis convoyeur selon l'une quelconque des revendications 1 à 3, caractérisé en ce que le pouvoir réfléchissant de la partie (5) placée derrière le tapis (1) est supérieur au pouvoir réfléchissant de toute partie (6, 7) placée du côté de la cellule (4).

5. Dispositif selon la revendication 4, caractérisé en ce que la partie (6) de surface réfléchissante placée du côté de la cellule (4) est inclinée par rapport à la verticale.

6. Dispositif selon la revendication 4, caractérisé en ce que le bord supérieur de la partie (6) de surface réfléchissante placée du côté de la cellule (4) est dans une position inférieure à la surface supérieure du tapis convoyeur (1).

7. Dispositif selon la revendication 4, caractérisé en ce qu'au moins la partie de surface réfléchissante (6, 7) placée du côté de la cellule (4) est recouverte d'un revêtement (6a, 7a) abaissant le pouvoir réfléchissant.

8. Dispositif selon la revendication 4, caractérisé en ce que le bord supérieur de la partie (6) placée du côté de la cellule (4) est découpé en dents de scie et recouvre légèrement le bord inférieur de la partie (5) placée derrière le tapis (1).

9. Dispositif de détection de la présence d'objets (C, B, E) sur un tapis convoyeur (1) incluant une cellule photoélectrique (4) du type dit à rideau, et une surface réfléchissant placée en regard de la cellule (4), caractérisé en ce que ladite surface réfléchissante est divisée en au moins deux parties planes (5, 6) disposés de part et d'autre du tapis convoyeur (1), le bord supérieur de la partie (6) de surface placée du côté de la cellule (4) étant aligné avec la surface supérieure dudit tapis (1) et les coefficients de réflexion des deux parties (5, 6) étant différents, le pouvoir réfléchissant de la partie (5) placée derrière le tapis (1) étant supérieur au pouvoir réfléchissant de la partie (6) placée devant le tapis (1).

## Patentansprüche

1. Vorrichtung zum Nachweis von Gegenständen (C, B, E) auf einem Förderband (1) enthaltendeine fotoelektrische Zelle (4) des Reflexionsabtastungstyps und eine der Zelle gegenüberliegende reflektierende Oberfläche, dadurch gekennzeichnet, daß die reflektierende Oberfläche in wenigstens zwei Teile (5, 6) unterteilt ist, die für die Zelle (4) eine kontinuierliche Oberfläche bilden und beidseits der Bahn der Gegenstände (C, B, E) angeordnet sind.

2. Vorrichtung nach Anspruch 1, dadurch gekennzeichnet, daß das der Zelle (4) bezüglich des Förderbandes (1) gegenüberliegende Teil (5) der reflektierenden Oberfläche sich in der Form eines gekrümmten Spiegels darstellt.

3. Vorrichtung nach Anspruch 1, dadurch gekennzeichnet, daß die reflektierende Oberfläche aus drei ebenen Teilen (5, 6, 7) gebildet ist, daß zwei Teile (6, 7) nahe bei der Zelle und das dritte (5) der Zelle (4) bezüglich des Förderbandes (1) gegenüberliegend angeordnet sind, und daß die beiden ersten Teile (6, 7) ein Fenster zum Abtasten begrenzen.

4. Vorrichtung zum Nach weis von Gegenständen auf einem Förderband nach einem beliebigen der Ansprüche 1 bis 3, dadurch gekennzeichnet, daß die Reflexionskraft des hinter dem Förderband (1) angeordneten Teils (5) höher als die Reflexionskraft jedes nahe bei der Zelle (4) angeordneten Teils (6, 7) ist.

5. Vorrichtung nach Anspruch 4, dadurch gekennzeichnet, daß der nahe bei der Zelle (4) angeordnete Teil (6) der reflektierenden Oberfläche zur Vertikalen geneigt ist.

6. Vorrichtung nach Anspruch 4, dadurch gekennzeichnet, daß der obere Rand des nahe bei der Zelle (4) angeordneten Teils (6) der reflektierenden Oberfläche in einer Position ist, die tiefer als die obere Oberfläche des Förderbandes (1) ist.

7. Vorrichtung nach Anspruch 4, dadurch gekennzeichnet, daß wenigstens der nahe bei der Zelle (4) angeordnete Teil (6, 7) der reflektierenden Oberfläche mit einem die Reflexionskraft vermindernden Überzug (6a, 7a) bedeckt ist.

8. Vorrichtung nach Anspruch 4, dadurch gekennzeichnet, daß der obere Rand des nahe bei der Zelle (4) angeordneten Teils (6) als Sägezähne ausgeschnitten ist und den unteren Rand des hinter dem Förderband (1) angeordneten Teils (5) leicht überdeckt.

9. Vorrichtung zum Nachweis von Gegenständen (C, B, E) auf einem Förderband (1) enthaltend eine fotoelektrische Zelle (4) des als Vorhang bezeichneten Typs und eine der Zelle (4) gegenüberliegend angeordnete reflektierende Oberfläche, dadurch gekennzeichnet, daß die reflektierende Oberfläche in wenigstens zwei ebene Teile (5, 6) unterteilt ist, die beidseits des Förderbandes (1) angeordnet sind, daß der obere Rand des nahe bei der Zelle (4) angeordneten Teils (6) der Oberfläche bündig mit der Oberfläche des Förderbandes (1) ist und die Reflexionskoeffizienten der beiden Teile (5, 6) verschieden sind, wobei die Reflexionskraft des hinter dem Förderband (1) angeordneten Teils (5) größer als die Reflexionskraft des vor dem Förderband (1) angeordneten Teils (6) ist.

## Claims

1. Means for detecting the presence of objects (C, B, E) on a conveyor belt (1) and including a photoelectric cell (4) of the reflex scanning type and a reflecting surface placed opposite the cell, characterized in that said reflecting surface is divided into at least two parts (5, 6) which form a continuous surface for the cell (4) and are disposed at both sides of the path of the objects (C, B, E).

2. Means according to claim 1, characterized in that the part (5) of the reflecting surface opposite the cell (4) in relation to the conveyor belt (1) is formed by a curved mirror.

3. Means according to claim 1, characterized in that the reflecting surface is constituted by three planar parts (5, 6, 7), two parts (6, 7) being disposed at the same side as the cell (4) and the third (5) opposite said cell (4) in relation to the conveyor belt (1), the two first parts (6, 7) defining a scanning window.

4. Means for detecting the presence of objects on a conveyor belt according to any one of claims 1 to 3, characterized in that the reflecting power of the part (5) placed behind the belt (1) is greater than the reflecting power of any part (6, 7) placed at the side of the cell (4).

5. Means according to claims 4, characterized in that the part (6) of the reflecting surface placed at the side of the cell (4) is inclined in relation to the vertical.

6. Means according to claim 4, characterized in that the upper edge of the part (6) of the reflecting surface placed at the side of the cell (4) is in a position lower than that of the upper surface of the conveyor belt (1).

7. Means according to claim 4, characterized in that at least the part of the reflecting surface (6, 7) placed at the side of the cell (4) is covered by a coating (6a, 7a) which reduces the reflecting power.

8. Means according to claim 4, characterized in that the upper edge of the part (6) placed at the side of the cell (4) is serrated and slightly covers the lower edge of the part (5) placed behind the belt (1).

9. Means for detecting the presence of objects (C, B, E) on a conveyor belt (1) and including a photoelectric cell (4) of the "curtain" type, and a reflecting surface placed opposite the cell (4), characterized in that said reflecting surface is divided into at least two planar parts (5, 6) disposed on each side of the conveyor belt (1), the upper edge of the surface part (6) placed at the same side as the cell (4) being aligned with the upper surface of said belt (1) and the coefficients of reflection of the two parts (5, 6) being different, the reflecting power of the part (5) placed behind the belt (1) being greater than the reflecting power of the part (6) placed in front of the belt (1).

**0012076**

*Fig.1*

ART ANTERIEUR

*Fig.2*

*Fig.3*

*Fig.4*

0012076

Fig.5

5

6

Fig.6

5

C

6

Fig.7

B

7a    7    5a

5

O

6a    6

2